# EUROPEAN PATENT APPLICATION

(11) **EP 3 681 247 A1**
(43) Date of publication of application: **15.07.2020**
(21) Application number: 17924194.8
(22) Date of filing: 08.09.2017
(51) Int. Cl.: H04W 92/18, H04W 72/04

(54) **USER DEVICE AND CAPABILITY INFORMATION NOTIFICATION METHOD**

(71) Applicant: NTT DOCOMO, INC., Chiyoda-ku Tokyo 100-6150 (JP)
(72) Inventor: YASUKAWA, Shinpei, Tokyo 100-6150 (JP); NAGATA, Satoshi, Tokyo 100-6150 (JP); WANG, Huan, Beijing 100190 (CN)
(74) Representative: Hoffmann Eitle
(86) International application number: PCT/JP2017/032587
(87) International publication number: WO 2019/049348

(57) **Abstract**

A user equipment in a radio communication system, includes a configuration information managing unit configured to hold mapping information indicating mapping between capability information and a resource in sidelink; and a signal transmitting unit configured to report capability information of the user equipment, by transmitting a report signal by using a resource corresponding to the capability information of the user equipment in the sidelink, based on the mapping information.

## Description

### [Technical Field]

The present invention relates to a user equipment in a radio communication system.

### [Background Art]

In LTE (Long Term Evolution) and the successor system of LTE (for example, LTE-A (LTE Advanced), NR (New Radio) (also referred to as 5G)), a D2D (Device to Device) technique, in which user equipments communicate directly without involving a base station, has been studied.

D2D reduces the traffic between the user equipment and the base station, and enables communication between the user equipments even when the base station becomes unable to communicate in the event of a disaster, etc.

D2D is roughly divided into D2D discovery for finding other communicable user equipments, and D2D communication for performing direct communication between user equipments (also referred to as D2D direct communication, D2D communication, inter-terminal direct communication, etc.). In the following, when D2D communication and D2D discovery, etc., are not distinguished from each other, each of these techniques is simply referred to as D2D. Furthermore, signals transmitted and received by D2D are referred to as D2D signals. Furthermore, D2D may be referred to as sidelink.

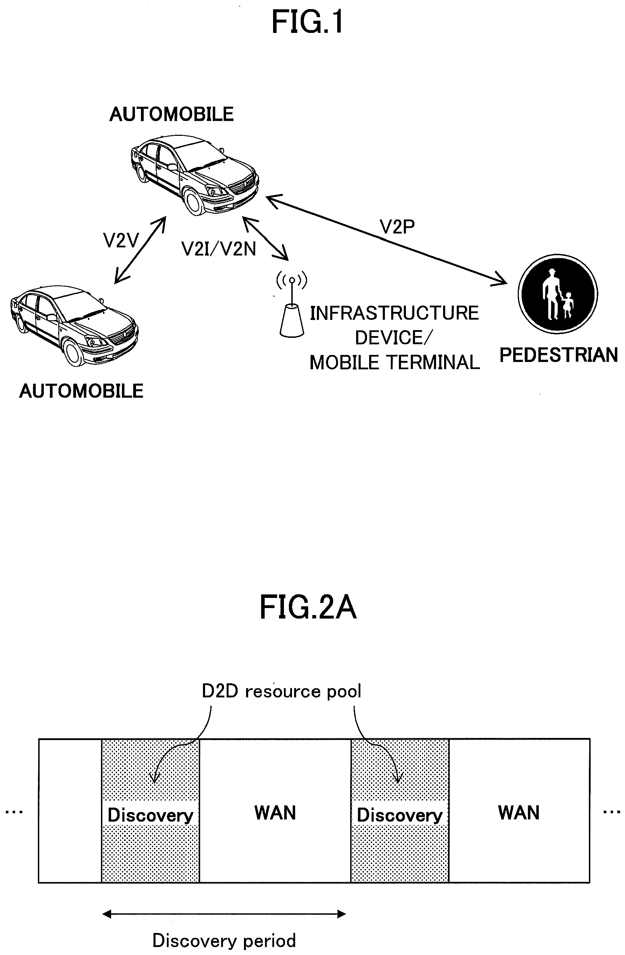

Furthermore, in 3GPP, studies are being made to realize V2X (Vehicle to Everything) by extending the above D2D function, and specifications of V2X are being made. Here, V2X is a part of ITS (Intelligent Transport Systems), and as illustrated in FIG. 1, V2X is a collective term of V2V (Vehicle to Vehicle) meaning a communication mode implemented between vehicles, V2I (Vehicle to Infrastructure) meaning a communication mode implemented between a vehicle and a road-side unit (RSU) installed at the side of a road, V2N (Vehicle to Nomadic device) meaning a communication mode implemented between a vehicle and a mobile terminal of a driver), and V2P (Vehicle to Pedestrian) meaning a communication mode implemented between a vehicle and a mobile terminal of a pedestrian.

In Rel-14 of LTE, specifications on several functions of V2X have been made (for example, Non-Patent Literature 1). In these specifications, Mode 3 and Mode 4 are defined with respect to resource allocation for V2X communication to the user equipment. In Mode 3, transmission resources are allocated dynamically by DCI (Downlink Control Information) sent from the base station to the user equipment. Furthermore, in Mode 3, SPS (Semi Persistent Scheduling) is also possible. In Mode 4, the user equipment autonomously selects a transmission resource from the resource pool.

### [Citation List]

### [Non-Patent Literature]

[NPTL 1] 3GPP TS 36.213 V14.2.0 (2017-03)

### [Summary of Invention]

### [Technical Problem]

In the communication between the base station and the user equipment, capability information (hereinafter referred to as UE capability) is transmitted from the user equipment to the base station, and the base station communicates with the user equipment, for example, by a communication method in accordance with the UE capability of the user equipment.

However, in sidelink communication including V2X, reporting of UE capability between user equipments is not defined. For this reason, for example, a user equipment, which has a high capability for transmitting signals by a new communication method, cannot detect whether there is a user equipment that does not have a reception capability corresponding to the high capability in the vicinity, and, therefore, there is a problem in that it is difficult to determine whether signals can be transmitted by the new communication method.

The present invention has been made in view of the above points, and it is an object of the present invention to provide a technique that enables a user equipment supporting sidelink communication to transmit capability information of sidelink to another user equipment, or to receive capability information of sidelink from another user equipment.

### [Solution to Problem]

According to the disclosed technology, there is provided a user equipment in a radio communication system, the user equipment including a configuration information managing unit configured to hold mapping information indicating mapping between capability information and a resource in sidelink; and a signal transmitting unit configured to report capability information of the user equipment, by transmitting a report signal by using a resource corresponding to the capability information of the user equipment in the sidelink, based on the mapping information.

### [Advantageous Effects of Invention]

According to the disclosed technology, there is provided a technique enabling the user equipment supporting the sidelink communication to transmit sidelink capability information to another user equipment or receive sidelink capability information from another user equipment.

### [Brief Description of Drawings]

FIG. 1 is a diagram for describing V2X.
FIG. 2A is a diagram for describing D2D.
FIG. 2B is a diagram for describing D2D.
FIG. 3 is a diagram for describing a MAC PDU used for D2D communication.
FIG. 4 is a diagram for describing a format of an SL-SCH subheader.
FIG. 5 is a diagram for describing an example of a channel structure used in D2D.
FIG. 6A is a diagram illustrating an example of a structure of PSDCH.
FIG. 6B is a diagram illustrating an example of a structure of PSDCH.
FIG. 7A is a diagram illustrating an example of the structure of PSCCH and PSSCH.
FIG. 7B is a diagram illustrating an example of the structure of PSCCH and PSSCH.
FIG. 8 is a diagram illustrating a configuration example of a radio communication system according to an embodiment.
FIG. 9 is a diagram for describing a basic operation example.
FIG. 10A is a diagram illustrating an example of a UE capability set.
FIG. 10B is a diagram illustrating an example of a UE capability set.
FIG. 11 is a diagram illustrating an example of mapping of a UE capability.
FIG. 12 is a diagram illustrating an example of mapping of a UE capability.
FIG. 13 is a diagram illustrating an example of transmitting a UE capability using synchronization signals.
FIG. 14 is a diagram illustrating an example of transmitting a UE capability using synchronization signals.
FIG. 15 is a diagram illustrating an example of transmitting a UE capability using DM-RS.
FIG. 16 is a diagram illustrating an example of transmitting a UE capability using PSBCH.
FIG. 17 is a diagram illustrating an example of transmitting a UE capability using SLSS/PSBCH.
FIG. 18 is a diagram illustrating an example of transmitting UE capability using SLSS/PSBCH.
FIG. 19 is a diagram illustrating an example of transmitting a UE capability using SL group discovery signals.
FIG. 20 is a diagram for describing a multiplexing method of SL group discovery signals and another SL channel/signal.
FIG. 21 is a diagram for describing a multiplexing method of SL group discovery signals and another SL channel/signal.
FIG. 22 is a diagram for describing a multiplexing method of SL group discovery signals and another SL channel/signal.
FIG. 23 is a diagram for describing propagation of a UE capability.
FIG. 24 is a diagram for describing propagation of a UE capability.
FIG. 25 is a diagram for describing an example of network assistance.
FIG. 26 is a diagram illustrating an example of a functional configuration of a user equipment UE according to an embodiment.
FIG. 27 is a diagram illustrating an example of a functional configuration of a base station according to an embodiment.
FIG.28 is a diagram illustrating an example of a hardware configuration of a base station 10 and a user equipment UE according to an embodiment.

### [Description of embodiment]

Hereinafter, an embodiment (present embodiment) of the present invention will be described with reference to the drawings. Note that the embodiment described below is merely an example, and embodiments to which the present invention is applied are not limited to the following embodiments.

It is assumed that the radio communication system according to the present embodiment supports at least the existing LTE communication method. Therefore, when the radio communication system operates, the existing technology defined in the existing LTE can be used as appropriate. However, the existing technology is not limited to LTE. Furthermore, "LTE" used in the present specification has a broad meaning including LTE-Advanced and methods after LTE-Advanced unless otherwise specified.

In the embodiments described below, terms such as the channel name and the signal name used in the existing LTE are used as a matter of convenience of description, and the same channels, signals, etc., may be referred to by other names.

Furthermore, although it is assumed that the present embodiment is mainly directed to V2X, the technology according to the present embodiment is not limited to V2X, but can be widely applied to D2D in general.

### (Outline of D2D)

In the present embodiment, the basic technique is D2D, and, therefore, the user equipment according to the present embodiment in the description of the outline of D2D defined in LTE, can transmit and receive D2D signals according to the technique.

As already described, D2D is roughly divided into "D2D discovery" and "D2D communication". As for "D2D discovery", as illustrated in FIG. 2A, a resource pool for a discovery message is secured for each discovery period, and the user equipment transmits a discovery message (discovery signal) in the resource pool. More specifically, there are Type 1 and Type 2b. In Type 1, a user equipment UE autonomously selects a transmission resource from the resource pool. In Type 2b, a semi-static resource is allocated by upper layer signaling (for example, RRC signals).

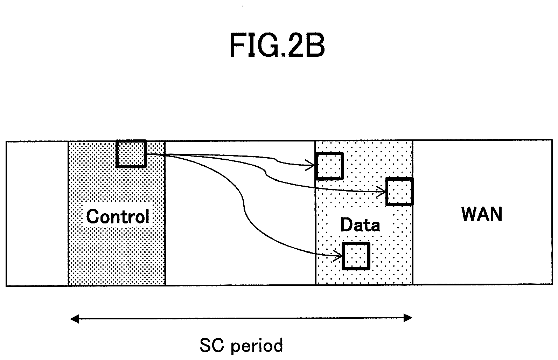

As for "D2D communication", resource pools for SCI (Sidelink Control Information)/data transmission are periodically secured as illustrated in FIG. 2B. The user equipment on the transmitting side reports, to the receiving side, the data transmission resource (PSSCH resource pool), etc., by the SCI, with the resource selected from the Control resource pool (PSCCH resource pool), and transmits the data with the data transmission resource. With respect to "D2D communication", more specifically, there are Mode 1 and Mode 2. In Mode 1, resources are dynamically allocated by (E) PDCCH sent from the base station to the user equipment. In Mode 2, the user equipment autonomously selects a transmission resource from the resource pool. As the resource pool, a resource pool reported by SIB or a predefined resource pool is used.

In Rel-14, in addition to Mode 1 and Mode 2, there are Mode 3 and Mode 4. In Rel-14, it is possible to transmit SCI and data simultaneously (in one subframe), with resource blocks adjacent to each other in the frequency direction.

In LTE, the channel used for "D2D discovery" is referred to as PSDCH (Physical Sidelink Discovery Channel), the channel for transmitting control information such as SCI in "D2D communication" is referred to as PSCCH (Physical Sidelink Control Channel), and the channel for transmitting data is referred to as PSSCH (Physical Sidelink Shared Channel).

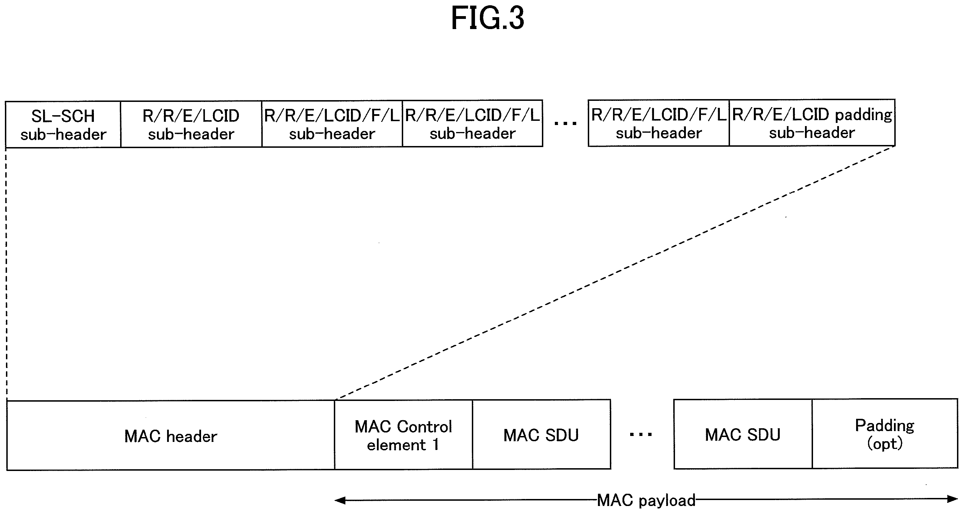

As illustrated in FIG. 3, MAC (Medium Access Control) PDU (Protocol Data Unit) used for D2D is formed of at least a MAC header, a MAC Control element, a MAC SDU (Service Data Unit), and a Padding. The MAC PDU may include other information. The MAC header is formed of one SL-SCH (Sidelink Shared Channel) subheader and one or more MAC PDU subheaders.

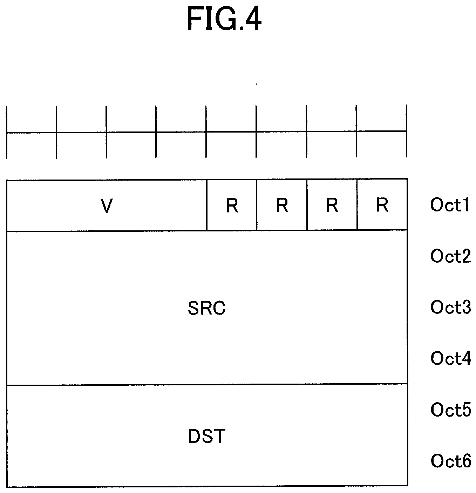

As illustrated in FIG. 4, the SL-SCH subheader is formed of a MAC PDU format version (V), transmission source information (SRC), transmission destination information (DST), and a reserved bit (R), etc. V is allocated to the head of the SL-SCH subheader and indicates the MAC PDU format version used by the user equipment. In the transmission source information, information relating to the transmission source is set. In the transmission source information, an identifier relating to ProSe UE ID may be set. In the transmission destination information, information relating to the transmission destination is set. In the transmission destination information, information relating to the ProSe Layer-2 Group ID of the transmission destination may be set.

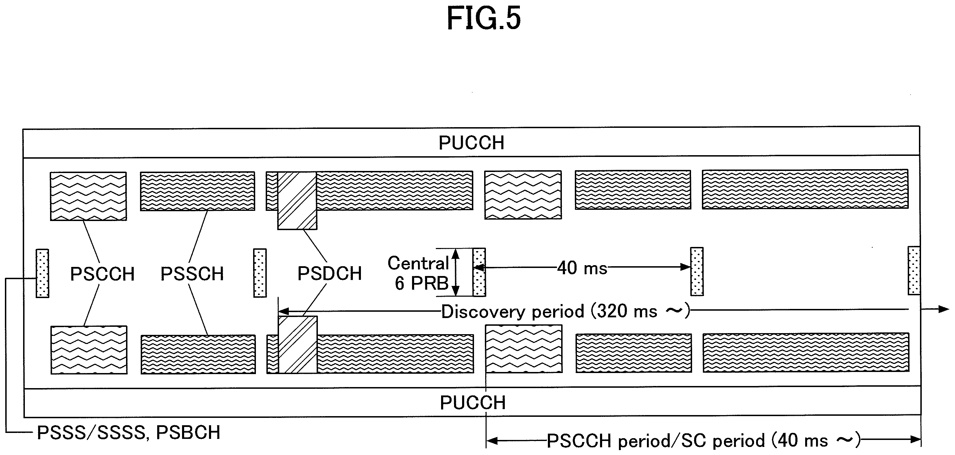

An example of the channel structure of D2D is illustrated in FIG. 5. As illustrated in FIG. 5, resource pools of PSCCH and resource pools of PSSCH used for "D2D communication" are allocated. Furthermore, resource pools of PSDCH used for "D2D discovery" are allocated at a cycle longer than the cycle of the channels of "D2D communication".

Furthermore, as synchronization signals for D2D, PSSS (Primary Sidelink Synchronization Signal) and SSSS (Secondary Sidelink Synchronization Signal) are used. Furthermore, for example, PSBCH (Physical Sidelink Broadcast Channel) that transmits broadcast information such as a D2D system band, a frame number, and resource configuration information, etc., for D2D, is used for out-of-coverage operations. PSSS/SSSS and PSBCH are transmitted in one subframe. In the following description, PSSS/SSSS is described as SLSS. Note that in one subframe, SLSS not including PSBCH may be transmitted.

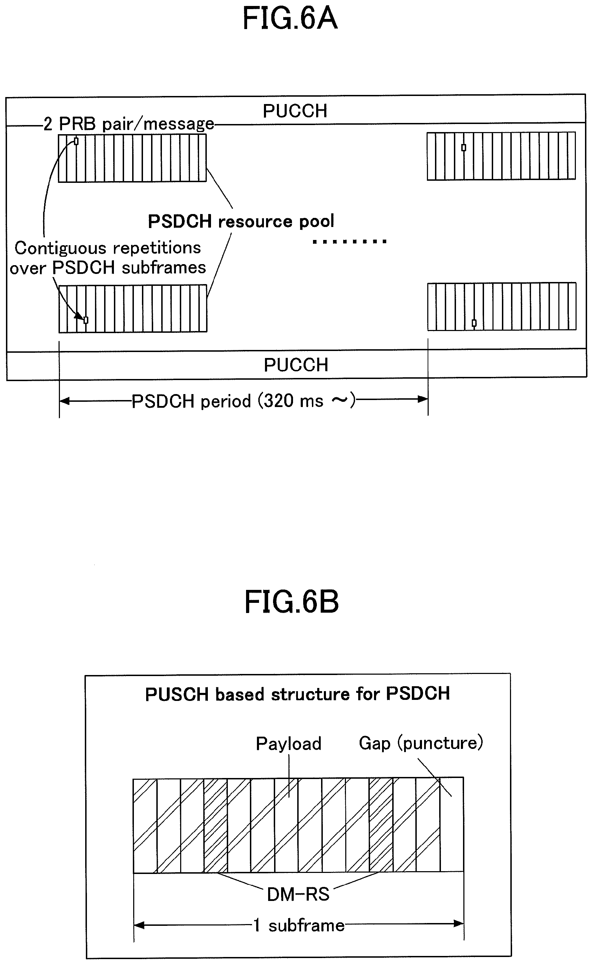

FIG. 6A illustrates an example of resource pools of PSDCH used for "D2D discovery". The resource pools are set by bitmaps of subframes, and, therefore, the resource pools appear to have an image as illustrated in FIG. 6A. The same applies to resource pools of other channels. Furthermore, in PSDCH, a signal is repeatedly transmitted (repetition) while performing frequency hopping. The number of repetitions can be set, for example, from 0 to 4. Furthermore, as illustrated in FIG. 6B, the PSDCH has a PUSCH based structure, and has a structure in which a DM-RS (demodulation reference signal) is inserted.

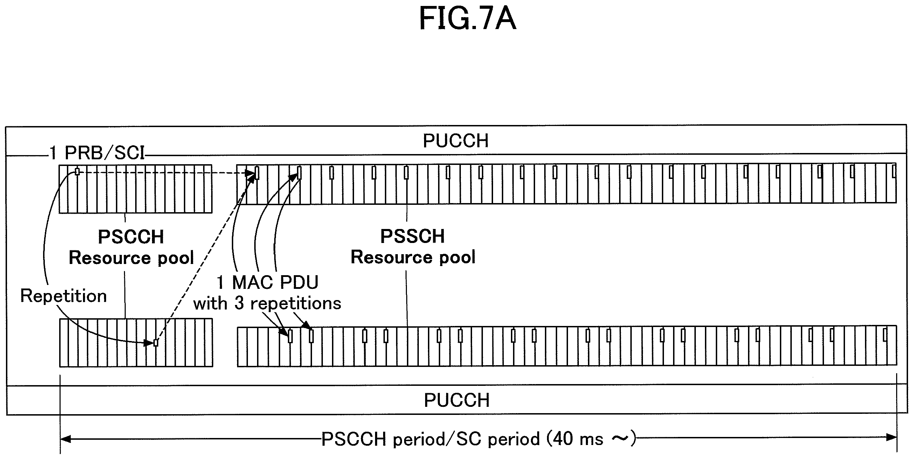

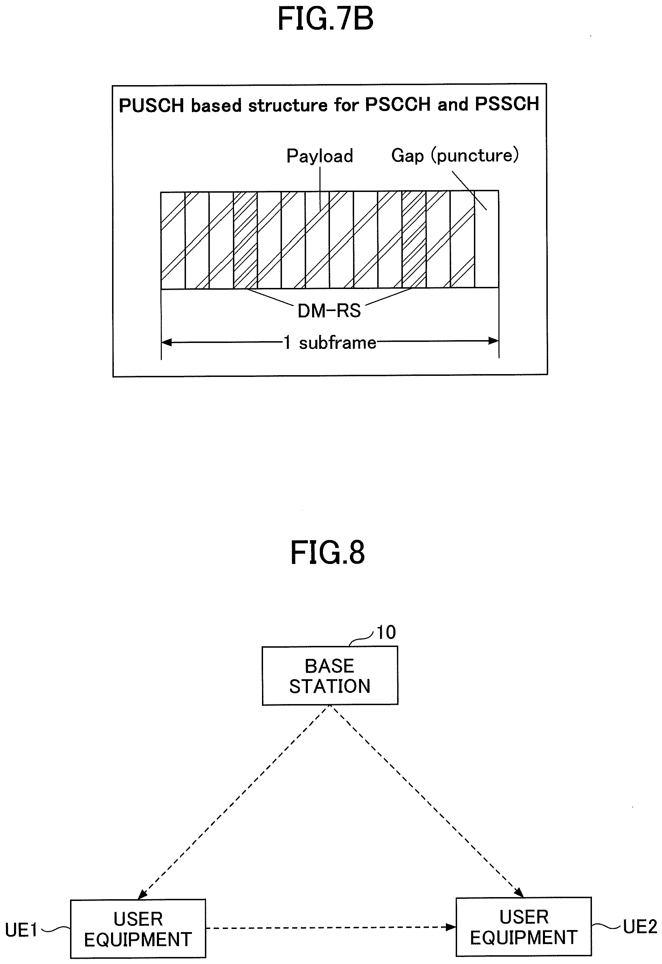

FIG. 7A illustrates an example of resource pools of PSCCH and PSSCH used for "D2D communication". In the example illustrated in FIG. 7A, in PSCCH, a signal is repeatedly transmitted twice including the first time (repetition), while performing frequency hopping. In PSSCH, a signal is repeatedly transmitted four times including the first time (repetition), while performing frequency hopping. Furthermore, as illustrated in FIG. 7B, PSCCH and PSSCH have a PUSCH based structure, and have a structure in which a DM-RS is inserted.

### (System configuration)

FIG. 8 is a diagram illustrating a configuration example of the radio communication system according to the present embodiment. As illustrated in FIG. 8, the radio communication system according to the present embodiment includes a base station 10, a user equipment UE1, and a user equipment UE2. In FIG. 8, the user equipment UE1 is intended to be the transmitting side, and the user equipment UE2 is intended to be the receiving side; however, both the user equipment UE1 and the user equipment UE2 have both a transmitting function and a receiving function. Hereinafter, when the user equipment UE1 and the user equipment UE2 are not particularly distinguished from each other, each of these is simply described as a "user equipment UE". Furthermore, in FIG. 8, as an example, a case where the user equipment UE1 and the user equipment UE2 are both within the coverage is illustrated; however, the operation according to the present embodiment is applicable to a case where both user equipments UE are outside the coverage and a case where one user equipment UE is within the coverage and the other user equipment UE is outside the coverage.

Each of the user equipments UE illustrated in FIG. 8 has the function of cellular communication as a user equipment UE in LTE or NR, and a D2D function including signal transmission and reception in the above-described channels. Furthermore, the user equipment UE has a function of executing the operations described in the present embodiment.

Furthermore the user equipment UE may be any device having the function of D2D; for example, the user equipment UE may be a vehicle, a terminal held by a pedestrian, and an RSU (UE type RSU having the function of UE), etc.

Furthermore, the base station 10 has a function of cellular communication as the base station 10 in LTE or NR, and a function for enabling communication of the user equipment UE according to the present embodiment (setting mapping information and setting limitation information, etc., in the user equipment UE). Furthermore, the base station 10 may be an RSU (eNB type RSU having the function of eNB).

Furthermore, in the radio communication system according to the present embodiment, as the signal waveform used by the user equipment UE for the sidelink, OFDMA, SC-FDMA, or other signal waveforms may be used. Furthermore, in the radio communication system according to the present embodiment, a frame including a plurality of subframes (for example, 10 subframes) is formed in the time direction as in the existing LTE, and a plurality of subcarriers is formed in the frequency direction. However, this is an example, and time units (for example, slots) other than subframes may be used as the TTI.

### (Basic operation example)

In the present embodiment, the user equipment UE transmits the UE capability (capability information of the user equipment UE) by a UE specific manner or a group common manner.

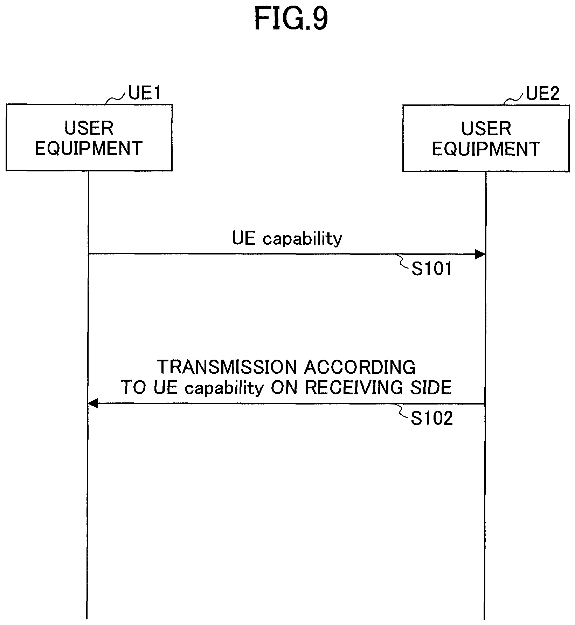

For example, as illustrated in FIG. 9, the user equipment UE1 transmits the UE capability, and the user equipment UE2 receives the UE capability (step S101). The user equipment UE2 can transmit signals by a method corresponding to a capability that is less than or equal to the capability determined from the UE capability of the transmitting-side user equipment UE1 (step S102). For example, when the user equipment UE2 has a transmit diversity function, but the receiving side does not have a function of receiving signals of transmit diversity, the user equipment UE2 can transmit signals without using the transmit diversity function.

FIG. 9 illustrates that the user equipment UE2 receives the UE capability from one user equipment UE1; however, the user equipment UE2 may also receive the UE capability from a plurality of neighboring user equipments UE. In this case, for example, if the user equipment UE2 detects that all the neighboring user equipments UE have the same or higher capability than itself (the user equipment UE2), the user equipment UE2 can transmit signals by multicast or group cast by a method corresponding to the capability of the user equipment UE2 itself.

Here, the UE capability in sidelink according to the present embodiment will be described. The user equipment UE supports any UE capability below the highest capability UE that the user equipment UE can support. Note that the user equipment UE may select and report a UE capability that is lower than the highest UE capability that the user equipment UE can support. For example, the user equipment UE, which has a capability (or pre-configured capability) reported or set by the base station or another user equipment, reports a UE capability lower than the highest UE capability that the user equipment UE supports.

When the user equipment UE determines a transmission parameter, the transmission parameter may be determined based on the UE capability used for the reporting.

The UE capability may be information including one or more features supported by the user equipment UE, or may be an ID (identification information, index) indicating a set of features. Furthermore, a UE capability set may be defined as information including features supported by the user equipment UE.

The UE capability set is, for example, an assembly of features supported by the user equipment UE. Examples of such features include the number of transmission/reception MIMO layers, a transmission bit rate, whether diversity transmission is performed, and a band combination of CA, etc.

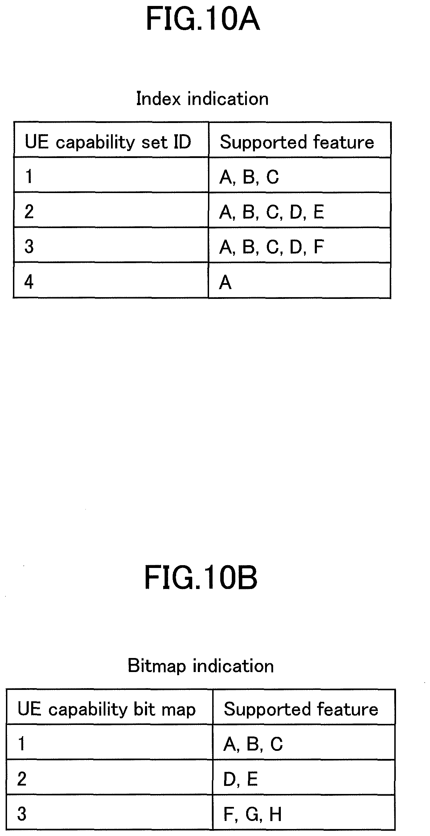

The UE capability set is reported by an ID (may be an index). For example, as illustrated in FIG. 10A, a table associating the UE capability set ID with the supported feature is pre-configured, and the user equipment UE transmits, as the UE capability, the UE capability set ID corresponding to the capability of the user equipment UE itself. In the example of FIG. 10A, for example, the user equipment UE having feature-A, feature-B, and feature-C transmits "1" as the UE capability set ID.

Furthermore, the feature may be represented by a bitmap, and based on the mapping illustrated in FIG. 10B, the user equipment UE may transmit the UE capability set ID corresponding to the bitmap of the user equipment UE itself. For example, assume that there are 8 features (A, B, C, D, E, F, G, H), and that a bitmap is defined in an order starting from the left one of these features. In this case, for example, the bitmap corresponding to the UE capability set ID=2 in FIG. 10B is represented as "000101000". The bitmap and mapping information may be pre-configured in the user equipment UE.

By reporting the UE capability by using the above set, overhead can be reduced.

In the following description, "UE capability" may be replaced with "UE capability set" or "UE capability set" may be replaced with "UE capability".

Hereinafter, the group common manner will be described as example 1 and the UE specific manner will be described as example 2. As described below, example 1 includes example 1-1, example 1-2, and example 1-3, and example 2 includes example 2-1, example 2-2, and example 2-3.

### (Example 1: group common manner)

First, example 1 will be described. In example 1, the user equipment UE transmits the UE capability according to common information among a plurality of user equipments (a group of user equipments). For example, the user equipments UE, belonging to the group of user equipments UE with UE capability=#1, send reports by the same resource and the same cyclic shift in the group.

In example 1, the user equipment UE on the receiving side that receives the UE capability, can detect that a user equipment UE having the received UE capability is present in the vicinity, although the transmission source of the UE capability cannot be identified.

Specifically, there are the following example 1-1, example 1-2, and example 1-3.

In example 1-1, the user equipment UE transmits the UE capability by SLSS and/or by signals (sequence, payload) transmitted together with the PSBCH in the same subframe as SLSS.

In example 1-2, the UE capability is transmitted by a sidelink broadcast channel, that is, PSBCH.

In example 1-3, the UE capability is transmitted by SL group discovery signals (sidelink group discovery signals) that are new signals. Each of the examples will be described below.

### <Example 1-1>

In example 1-1, the SLSS sequence and/or the SLSS transmission resource are associated with (mapped to) the UE capability. The SLSS sequence is associated with a SLSS ID, and, therefore, the SLSS sequence being associated with the UE capability may be paraphrased as the SLSS ID being associated with the UE capability. For example, the user equipment UE transmits the SLSS of the SLSS ID corresponding to the UE capability to be reported. Note that "sequence" may be regarded as one type of a transmission resource.

Furthermore, DM-RS (demodulation reference signal) transmitted together with the PSBCH, or the DM-RS transmitted together with another channel (PSCCH, PSSCH), may be mapped to the UE capability. In this case, for example, the DM-RS sequence and/or the cyclic shift and/or the port are mapped to the UE capability. Note that "cyclic shift" and "port" may be regarded as one type of a transmission resource.

Any of the above mapping methods may be predefined, or may be configured by RRC signaling from the base station 10 to the user equipment UE, or may be pre-configured in the user equipment UE. Note that that being "predefined" may be considered synonymous with being fixedly set in the user equipment UE, and may be regarded as one example of being pre-configured.

Hereinafter, such a setting as described above will be expressed as "(pre-)configured".

Note that the mapping information for UE capability transmission described in the present embodiment may be used as information for receiving (monitoring) UE capability in the user equipment UE, or the mapping information for receiving (monitoring) the UE capability may be (pre-)configured in the user equipment, separately from the mapping information used for transmission.

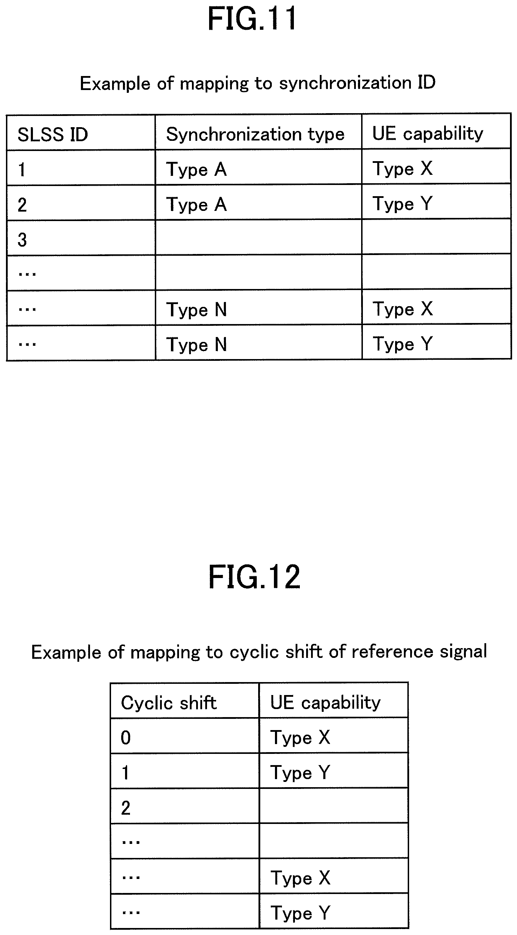

FIG. 11 illustrates an example of mapping between the SLSS ID and the UE capability. It is possible to identify the synchronization type, such as inside/outside the coverage, by the SLSS ID, and, therefore, the mapping of the synchronization type is also illustrated in FIG. 11. According to this mapping, for example, the user equipment UE, whose synchronization type is Type A and whose UE capability to be reported is Type X, transmits SLSS of SLSS ID=1.

FIG. 12 illustrates an example of mapping of a reference signal (for example, DM-RS) and the UE capability. According to this mapping, for example, the user equipment UE whose UE capability to be reported is Type X transmits a DM-RS with the cyclic shift set to 0.

With respect to the method of mapping the SLSS sequence to the UE capability, "PSSS and SSSS" forming the SLSS may be mapped to the UE capability, or only the PSSS may be mapped to the UE capability, or only the SSSS may be mapped to the UE capability.

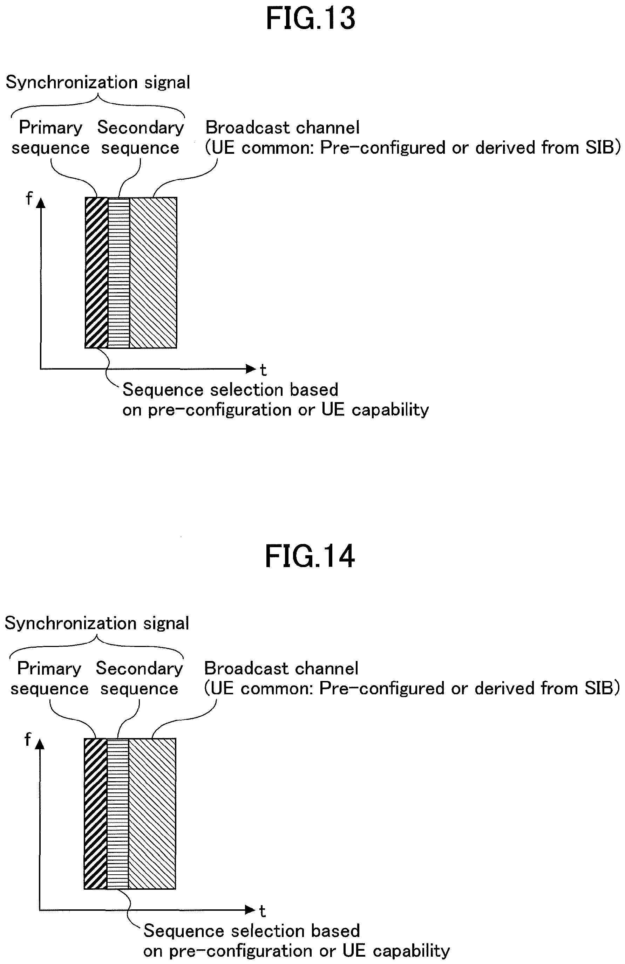

FIG. 13 illustrates an example in which only PSSS is mapped to the UE capability. FIG. 13 illustrates an example of a case where the user equipment UE transmits PSSS (primary sequence in the figure), SSSS (secondary sequence in the figure), and PSBCH (Broadcast channel in the figure) in a certain subframe. As illustrated in FIG. 13, the PSSS sequence is associated with the UE capability reported by the user equipment UE. The PSSS sequence may be pre-configured in accordance with the UE capability of the user equipment UE, and the user equipment UE may select the PSSS sequence according to the pre-configured PSSS sequence, or the user equipment UE may select the PSSS sequence according to the mapping between the PSSS sequence and the UE capability.

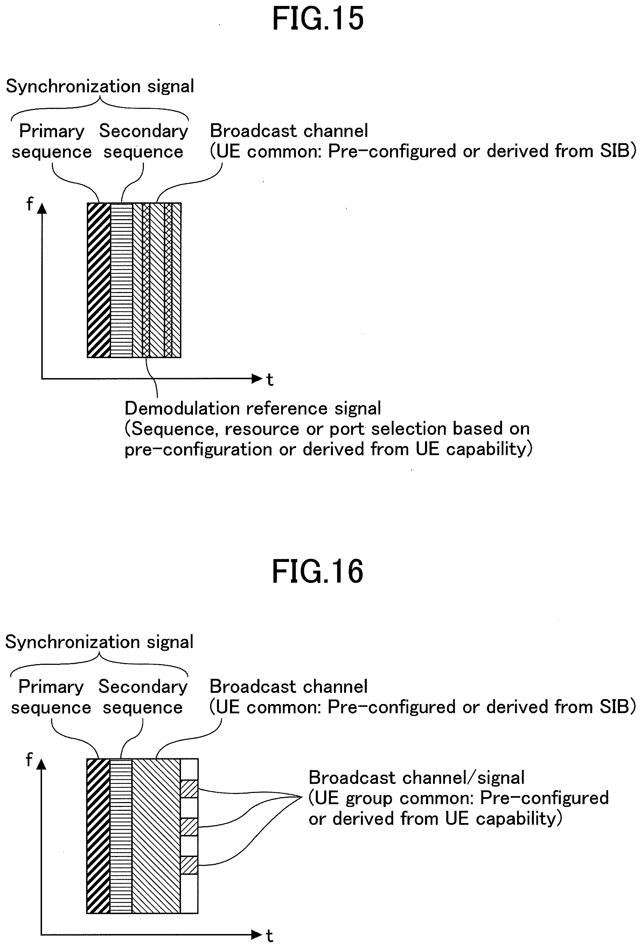

Note that as illustrated in FIG. 13, for example, the information carried by the PSBCH is common among the UEs in the cell. This point is the same also in FIGS. 14 and 15.

FIG. 14 illustrates an example in which only SSSS is mapped to the UE capability. As illustrated in FIG. 14, the SSSS sequence is associated with the UE capability of the user equipment UE. The SSSS sequence may be pre-configured in accordance with the UE capability of the user equipment UE, and the user equipment UE may select the SSSS sequence according to the pre-configured SSSS sequence, or the user equipment UE may select the SSSS sequence according to the mapping between the SSSS sequence and the UE capability.

FIG. 15 illustrates an example of transmitting the UE capability using the DM-RS transmitted with the PSBCH. As illustrated in FIG. 15, the DM-RS sequence, the transmission resource (time resource and/or frequency resource), or the port number is associated with the UE capability of the user equipment UE. The DM-RS sequence, the transmission resource, or the port number has been pre-configured in accordance with the UE capability of the user equipment UE, and according to the pre-configured data, the user equipment UE may select a DM-RS sequence, a transmission resource, or a port number. Alternatively, the user equipment UE may select a DM-RS sequence, a transmission resource (time resource and/or frequency resource), or a port number according to the mapping between a DM-RS sequence, a transmission resource (time resource and/or frequency resource), or a port number, and the UE capability.

FIG. 16 illustrates an example of transmitting the UE capability using a part of the PSBCH resource (for example, one or a plurality of a plurality of symbols transmitting PSBCH). The UE capability may be mapped to the resource, or the information (content) to be transmitted by the resource may be information (for example, an ID) indicating the UE capability.

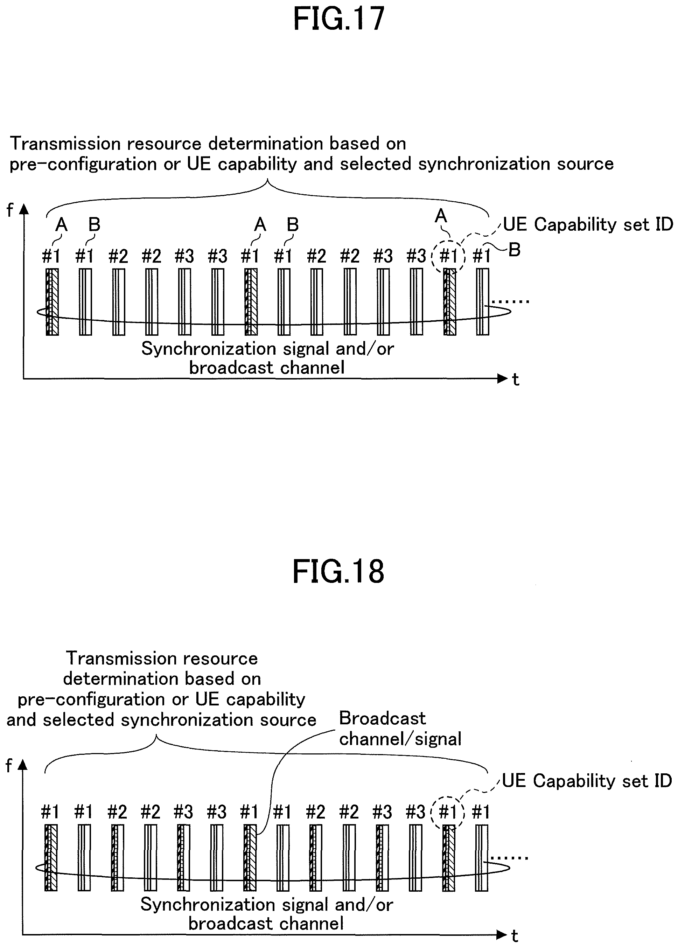

FIG. 17 illustrates an example where the transmission resource of the SLSS is mapped to the UE capability. More specifically, in the example of FIG. 17, the transmission subframe of the SLSS is mapped to the UE capability.

Basically, the SLSS is transmitted in a subframe based on a subframe offset and is transmitted at a predetermined cycle. In the example of FIG. 17, the mapping information indicating mapping between the transmission subframe number of the SLSS (for example, the number specified as the subframe offset) and the UE capability is (pre-)configured in the user equipment UE, and the user equipment UE transmits the SLSS in a subframe corresponding to the UE capability to be reported, based on this mapping information.

More specifically, in FIG. 17, the user equipment UE reports the UE capability ID=#1, and, therefore, the user equipment UE periodically transmits the SLSS in the subframe corresponding to ID=#1. Note that in the example of FIG. 17, PSBCH is transmitted together with SLSS; however, only SLSS may be transmitted without transmitting PSBCH.

Furthermore, in FIG. 17, as indicated by A and B, there are two subframes corresponding to ID=#1. Either one of A or B may be selected in accordance with a report of the subframe offset from the base station 10, or may be selected based on a synchronization source (for example, a base station source, GNSS source).

Furthermore, an SLSS transmission subframe may be pre-configured in the user equipment UE based on the UE capability, or the user equipment UE may select an SLSS transmission subframe according to the mapping information indicating mapping between the transmission subframe number of the SLSS and the UE capability.

Note that FIG. 17 illustrates an example in which the time resource of the SLSS is mapped to the UE capability; however, this is an example, and the frequency resource of the SLSS may be mapped to the UE capability.

In the user equipment UE on the receiving side that receives the SLSS illustrated in FIG. 17, for example, the same mapping information as the mapping information that is (pre-)configured in the user equipment UE on the transmitting side, is (pre-) configured, and the user equipment UE on the receiving side can detect the UE capability of the user equipment UE on the transmitting side that transmits the SLSS, based on the received subframe number of the SLSS and the mapping information. For example, the user equipment UE that has received the SLSS in the subframe indicated by A in FIG. 17, can detect that a user equipment UE with a UE capability set=#1 is present in the vicinity.

### <Example 1-2>

In example 1-2, the transmission resource of the PSBCH is mapped to the UE capability. A specific example will be described with reference to FIG. 18.

In the example of FIG. 18, the user equipment UE periodically transmits the SLSS in the subframe selected based on the subframe offset (or the synchronization source) reported from the base station 10, for example.

Furthermore, here, the mapping information indicating mapping between the transmission subframe number (specified as a subframe offset, for example) of the PSBCH and the UE capability, is (pre-)configured in the user equipment UE, and the user equipment UE transmits the PSBCH together with the SLSS in the subframe corresponding to the UE capability to be reported, based on the mapping information.

More specifically, in FIG. 18, the user equipment UE transmits the SLSS and PSBCH in a subframe corresponding to ID=#1, because ID=#1 is the ID of the UE capability of the user equipment UE itself.

A PSBCH transmission subframe may be pre-configured in the user equipment UE, based on the UE capability, or the user equipment UE may select a PSBCH transmission subframe according to the mapping information indicating mapping between the transmission subframe number of the PSBCH and the UE capability.

Note that FIG. 18 illustrates an example in which the time resource of the PSBCH is mapped to the UE capability; however, this is an example, and the frequency resource of the PSBCH may be mapped to the UE capability.

### <Example 1-3>

Next, example 1-3 will be described. As described above, in example 1-3, the user equipment UE transmits the UE capability by using SL group discovery signals (sidelink group discovery signal).

Similar to the reference signal or the synchronization signal, the SL group discovery signal is assumed to be a signal of a physical layer that does not transmit information from an upper layer. However, the present invention is not limited thereto, and the SL group discovery signal may be a signal transmitted on a channel transmitting information from an upper layer.

For example, for transmission, a sequence of SL group discovery signals and/or a resource of the SL group discovery signals are mapped to the UE capability. Furthermore, the mapping information is (pre-)configured in the user equipment UE. Then, for example, based on the mapping information, the user equipment UE transmits SL group discovery signals by using a sequence and/or a resource corresponding to the UE capability to be reported. Furthermore, for the transmission of the SL group discovery signal, a sequence of the SL group discovery signals and/or a resource of the SL group discovery signals corresponding to the UE capability of the user equipment UE, are (pre-)configured in the user equipment UE, and the user equipment UE may transmit the SL group discovery signals according to the (pre-)configured information.

Furthermore, for the reception (monitoring), a sequence of SL group discovery signals and/or a resource of SL group discovery signals may be mapped to the UE capability. Also in this case, the mapping information is (pre-)configured in the user equipment UE. For example, the user equipment UE monitors the sequence and/or the resource based on the mapping information, receives the SL group discovery signals, and detects the UE capability. Note that the mapping information for transmission may also serve as mapping information for reception.

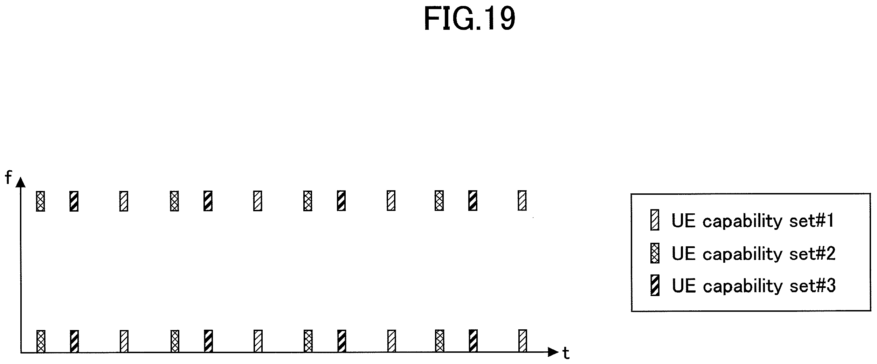

FIG. 19 illustrates an example of transmission of the SL group discovery signals. FIG. 19 illustrates an example of a case where the transmission time resource (subframe) of the SL group discovery signals is mapped to the UE capability. As illustrated in the figure, in the frequency domain, the SL group discovery signals are transmitted at both ends of the system band.

For example, in the example of FIG. 19, in a frequency domain where the SL group discovery signals are not transmitted, the user equipment UE can transmit sidelink signals other than the SL group discovery signals.

However, when the SL group discovery signals and the sidelink signals (for example, PSCCH, PSSCH, PSDCH) other than the SL group discovery signals cannot be transmitted simultaneously (that is, in the same subframe) due to the limitation of the transmission capability of the user equipment UE, for example, in the subframe, the user equipment UE may drop the transmission (i.e., not transmit) of the SL group discovery signals, and transmit sidelink signals other than the SL group discovery signals.

Furthermore, as described above, when simultaneous transmission of the SL group discovery signals and sidelink signals other than the SL group discovery signal occurs, and the SL group discovery signals are dropped, the user equipment UE may report the UE capability by using the sidelink signals that are not dropped (for example, PSCCH, PSSCH, PSDCH). As a reporting method in this case, for example, a DM-RS transmitted together with the sidelink signals may be used. In the case of using the DM-RS, as described above, based on the mapping between the UE capability and the sequence or cyclic shift, a DM-RS using a sequence or a cyclic shift corresponding to UE capability to be communicated, is transmitted.

As illustrated in FIG. 19, the user equipment UE can transmit the SL group discovery signals by using the frequency resources in the frequency domain at the end portions of the system band (one end or both ends). Thus, by using the frequency resources at the end portions of the system band, it is possible to avoid fragmentation of resources during the transmission of the sidelink signals other than the SL group discovery signals, so that it is particularly effective when using a signal waveform of a single carrier such as SC-FDMA.

Next, regarding the variation of the multiplexing method in the case where the SL group discovery signals and the sidelink signals other than the SL group discovery signals can be transmitted simultaneously, examples 1-3-1, 1-3-2, 1-3-3, and 1-3-4 are described. In the description of example 1-3 described below, sidelink signals other than the SL group discovery signals are simply referred to as sidelink signals.

In example 1-3-1, a resource (that may be a resource pool) for transmitting the sidelink signals, is (pre-)configured in the user equipment UE, and the sidelink signals and the SL group discovery signals are multiplexed by frequency-division multiplexing (FDM).

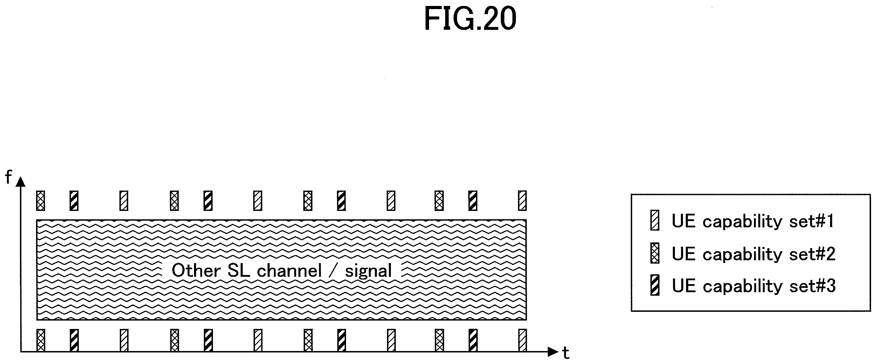

FIG. 20 illustrates an example of transmission of the SL group discovery signals and the sidelink signals (described as Other SL channel/signal in FIG. 20) in example 1-3-1. In the example illustrated in FIG. 20, the SL group discovery signals are transmitted by the frequency resources at both ends of the system band, and in the system band, at the inner part between the frequency resources by which the SL group discovery signals are transmitted, a resource pool of the sidelink signals is (pre-)configured, and the sidelink signals are transmitted by the resources in the resource pool.

In example 1-3-2, basically, resources of the entire system band can be used for transmission of the sidelink signals; however, among the resources, a blank resource (for example, puncture, rate matching) is (pre-)configured for transmitting SL group discovery signals. The user equipment UE transmits sidelink signals by using resources other than blank resources, and transmits SL group discovery signals by using blank resources.

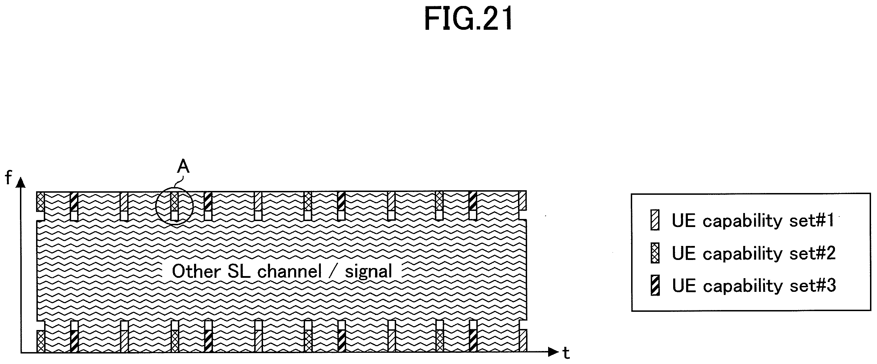

FIG. 21 illustrates an example of transmission of the SL group discovery signals and the sidelink signals (indicated as Other SL channel/signal in FIG. 21) in example 1-3-2. As illustrated in FIG. 21, SL group discovery signals are transmitted by using blank resources set at both ends of the system band, among resources capable of transmitting sidelink signals.

In example 1-3-3, for example, as illustrated in FIG. 19, the transmission resources of SL group discovery signals are pre-configured. Furthermore, the sidelink signals can be transmitted in resources other than the aforementioned resources. However, if some or all of the resources (for example, subchannels) for transmitting the sidelink signals (for example, PSCCH, PSSCH) overlap the transmission resources of the SL group discovery signals in a certain slot (or a certain subframe), the user equipment UE does not use (disables), for the transmission of the sidelink signals, the resources (subchannels) overlapping the transmission resource of the SL group discovery signals.

FIG. 21 is also a diagram illustrating example 1-3-3. In FIG. 21, for example, even when a resource indicated by A for SL group discovery signals is selected by the user equipment UE, as a subchannel for transmitting sidelink signals, at a time point before this resource appears, this resource is not used for transmitting the sidelink signals, but is used for transmitting the SL group discovery signals.

Example 1-3-4 is a detailed example of examples 1-3-1 to 1-3-3. In example 1-3-4, the user equipment UE excludes resources for the SL group discovery signals, from candidates of resources to be selected for transmitting sidelink signals.

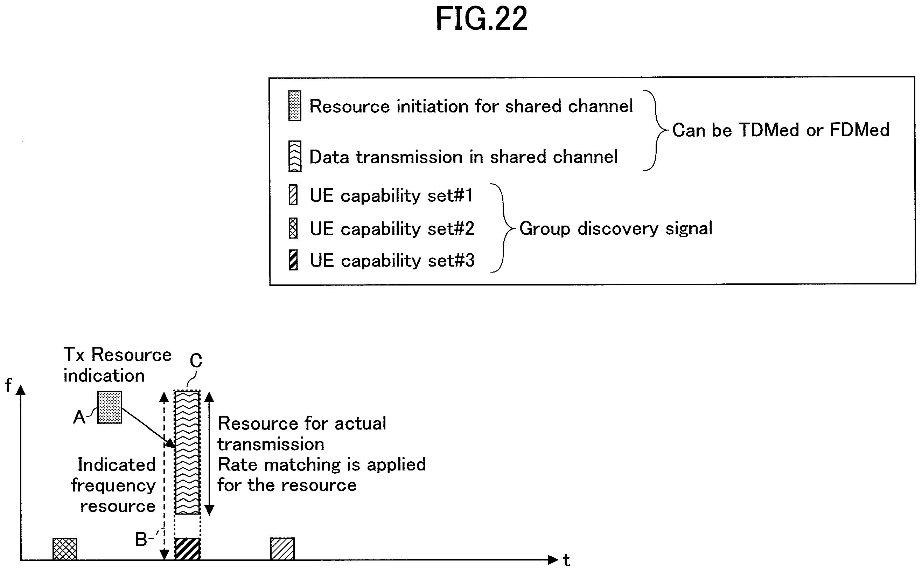

FIG. 22 is a diagram illustrating in more detail, a transmission example of the SL group discovery signals and the sidelink signals (here, "Data") in example 1-3-2, etc. As indicated by A in FIG. 22, control information specifying a resource of Data is transmitted by PSCCH. The granularity of the information of the resource reported by control information need not be a fine granularity corresponding to the transmission resource of the SL group discovery signals, and as indicated by B in FIG. 22, the granularity may be fine enough so as to include the transmission resource of the SL group discovery signals (for example, a granularity of the existing technology). Then, the user equipment UE transmitting the Data and the SL group discovery signals in the same slot indicated by C, adjusts the resource amount of the Data by rate matching, etc., so that the transmission resource of the SL group discovery signals does not overlap the transmission resource of the Data, and transmits the Data. The user equipment UE receiving the control information indicated by A receives information indicating that the resource indicated by B is allocated to the Data; however, by the (pre-)configuration, the user equipment UE recognizes the resources by which the SL group discovery signals can be transmitted, and, therefore, it is possible to receive the SL group discovery signals together with the Data.

### <Example common to examples 1-1, 1-2, and 1-3>

Note that as described above, the common method by which each user equipment UE transmits the UE capability common to a plurality of UEs (for example, transmitting SLSS in a subframe corresponding to the UE capability), is not only applicable to the reporting of the UE capability.

Furthermore, the monitoring resources of SLSS and/or PSBCH and/or the SL group discovery signals on the receiving side, may be (pre-)configured in the user equipment UE per UE capability. Accordingly, for example, the user equipment UE does not have to monitor resources for reporting the UE capability higher than the highest UE capability that the user equipment UE can support.

Furthermore, in a case where the measurement result of a report signal in the user equipment UE receiving the report signal of the UE capability (for example, the measurement result of the reception power of the signal) is lower than a (pre-)configured threshold value, the user equipment UE may determine that a user equipment UE having the UE capability reported by the report signal is not present in the vicinity.

Furthermore, in a case where the user equipment UE does not receive a report signal corresponding to a certain UE capability, the user equipment UE may determine that a user equipment UE having a UE capability associated with the report signal is not present in the vicinity.

### <Example common to examples 1-1, 1-2, and 1-3: regarding propagation of UE capability>

As illustrated in FIG. 17, FIG. 18, etc., in a case where the UE capability is mapped to the time resource (herein referred to as a "subframe") of the report signal of the UE capability (for example, SLSS, PSBCH, SL group discovery signals, DM-RS), the user equipment UE reporting the UE capability in a certain subframe, cannot receive a report of the UE capability from another user equipment UE transmitted in the corresponding subframe, due to limitations of Half duplex.

Therefore, in the case where the UE capability is mapped to the time resource (herein referred to as a "subframe") of the report signal of UE capability (for example, SLSS, PSBCH, SL group discovery signal, DM-RS), the user equipment UE selects and reports the lower UE capability, from among the highest UE capability supported by the user equipment UE itself and one or more UE capabilities received from another user equipment UE. In the case where there is a plurality of "lower UE capabilities", for example, the user equipment UE may report the lowest UE capability among the plurality of UE capabilities.

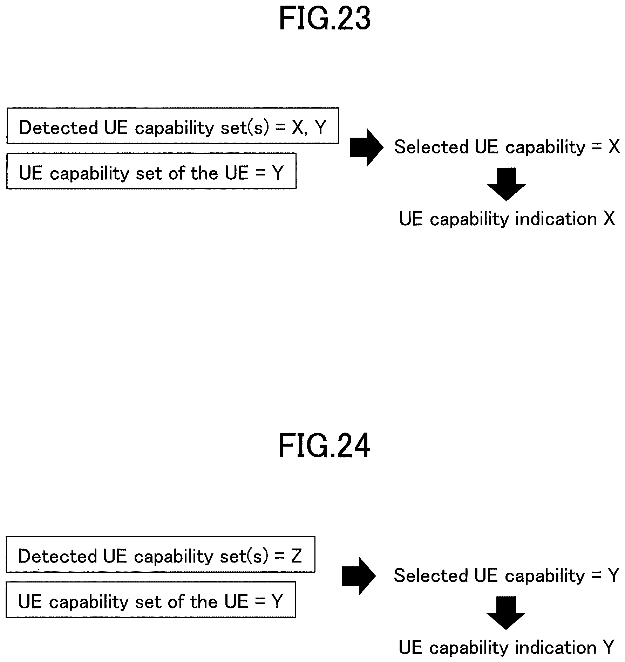

An example will be described with reference to FIGS. 23 and 24. In FIG. 23 and FIG. 24, as the UE capability, there are X, Y, and Z. Among X, Y, and Z, it is assumed that the highest UE capability is Z, the next highest UE capability is Y, and the lowest UE capability is X.

In the example illustrated in FIG. 23, the UE capability of a user equipment UE of interest (referred to as the user equipment UE1 as a matter of convenience) is Y. The user equipment UE1 receives report signals transmitted from the other neighboring user equipments UE, thereby detecting UE capability=X and UE capability=Y. Next, the user equipment UE1 selects the lower UE capability=X between the detected UE capability=X and UE capability=Y (or the UE capability=Y of the user equipment UE1 itself), and reports the selected UE capability=X. In the example of FIG. 23, a case of the user equipment UE1 not being able to detect UE capability=Y of another user equipment UE due to Half Duplex limitations may be considered; however, even in such a case, the user equipment UE1 can detect UE capability=X, and, therefore, the user equipment UE1 can report UE capability=X.

Thus, for example, in the case where the user equipment UE2 having the UE capability=Y, other than the user equipment UE1, is present in the vicinity of the user equipment UE1, the user equipment UE2 can detect that the user equipment UE1 reporting UE capability=X by which communication is possible with the user equipment UE2 itself, is present.

Also in the example illustrated in FIG. 24, the UE capability of the user equipment UE1 is Y. The user equipment UE1 detects the UE capability=Z by receiving the report signal transmitted from the another neighboring user equipment UE. Next, the user equipment UE1 selects the lower UE capability=Y between the detected UE capability=Z and the UE capability=Y of the user equipment UE1 itself, and reports the UE capability=Y.

Accordingly, for example, the user equipment UE having the UE capability=Z can detect that the user equipment UE1 reporting the UE capability=Y that can communicate with itself, is present.

Note that by the above processing, as illustrated in FIGS. 23 and 24, the user equipment UE that has selected a certain UE capability to be reported, may report the selected UE capability and monitor the UE capability, or transmit and receive sidelink signals by a method corresponding to the UE capability.

Furthermore, for example, it is conceivable that the state of FIG. 23 at a certain time point may change to the state of FIG. 24 after a predetermined time elapses. In order to address such a situation, the user equipment UE that has selected a certain UE capability may clear the selection at a time point when a predetermined time (for example, a time that is (pre-)configured) has elapsed from the time when the UE capability has been selected, and the user equipment UE may report the original UE capability, monitor neighboring UE capabilities, and select a UE capability to be newly reported.

Furthermore, in order to prevent a loop, the process of selecting and transmitting the UE capability to be reported, may be performed only for a UE capability in a subframe by which a specific SLSS ID is reported.

### (Example 2)

Next, example 2 which is a UE specific manner will be described. In example 2, each user equipment UE transmits the UE capability to be reported, for example, by a UE specific resource. In example 2, which is a UE specific manner, the user equipment UE on the receiving side of the UE capability can identify the user equipment UE that is the transmission source of the UE capability. Therefore, for example, the user equipment UE on the receiving side of the UE capability can transmit the sidelink signals to the user equipment UE, which is the transmission source of the UE capability, by a method according to the capability of the user equipment UE that is the transmission source. Specifically, there are the following example 2-1, example 2-2, and example 2-3. Each example will be described below.

### <Example 2-1>

In example 2-1, the user equipment UE transmits the UE capability by PSDCH.

For example, the user equipment UE can use the specific bits in the Discovery Message Format to report the UE capability. Furthermore, for each UE capability, the transmission resource pool and/or the resource hopping parameter of the PSDCH may be (pre-)configured in the user equipment UE, and the user equipment UE may report the UE capability by using the transmission resource pool and/or the resource hopping parameter corresponding to the UE capability to be reported.

### <Example 2-2>

In example 2-2, the user equipment UE transmits the UE capability by PSSCH or PSCCH.

For example, the user equipment UE can report the UE capability by using specific bits in the SCI transmitted by PSCCH. Furthermore, the user equipment UE may report the UE capability by using a MAC CE transmitted by PSSCH.

### <Example 2-3>

Example 2-3 is a network assistance method. Specifically, the user equipment UE reports the UE capability to the base station 10. Based on the UE capability, the base station 10 determines limitation information (for example, a transmission parameter allowed to be used) indicating features usable by each user equipment UE of the serving cell, and reports the limitation information to each user equipment UE by upper layer signaling. The upper layer signaling may be broadcast signaling (for example, system information (SIB)) or UE specific RRC signaling.

In the case where the base station 10 detects that a low-capability user equipment UE is present in the serving cell based on the UE capability received from one or more user equipments UE, for example, the base station 10 determines and transmits limitation information corresponding to the low capability.

Here, the "low capability" in the present specification refers to a capability of lower performance, among the capabilities belonging to a certain feature group, and "low capability" also means not being able to support the feature group. For example, when "transmit diversity method A, transmit diversity method B" are the "feature group", and "transmit diversity method B" is lower in performance than the transmit diversity method A, then the "transmit diversity method B" corresponds to "low capability". Furthermore, not supporting "transmit diversity" corresponds to "low capability".

Furthermore, determining and reporting the limitation information corresponding to the low capability also includes citing the features supported by the user equipment UE and determining and reporting the common capability of capabilities among the user equipments UE (corresponding to limitation information).

Upon receiving the limitation information in the serving cell, the user equipment UE applies the limitation information (for example, transmission parameter), and transmits the sidelink signals. The limitation information reported from the base station 10 may include any one or any two or more or all of the service ID, the priority (Priority level), the resource pool, and the SL carrier.

For example, in a case where the user equipment UE receives a certain service ID and a transmission parameter, the user equipment UE uses a transmission parameter, which corresponds to a capability less than or equal to the capability of the transmission parameter, for transmission in the service of the service ID. Furthermore, for example, in a case where the user equipment UE receives a certain priority level and a transmission parameter, if the priority level is higher than a priority level of other transmission parameters, the user equipment UE uses the reported transmission parameter as limitation information. Furthermore, for example, in a case where the user equipment UE receives a resource pool, the user equipment UE uses the resource pool to transmit sidelink signals. Furthermore, for example, in a case where the user equipment UE receives information indicating the SL carrier, the user equipment UE uses the SL carrier to transmit the sidelink signals.

In the case of transmitting PSBCH, the user equipment UE that has received a parameter from the base station 10 may transmit the parameter itself by PSBCH, or may transmit information determined based on the parameter (for example, information indicating that the transmission feature is limited) by PSBCH.

Furthermore, the limitation information transmitted from the base station 10 by the system information may be used for transmitting sidelink signals for the user equipment UE in an IDLE state. The limitation information is, for example, a transmission parameter allowed to be used and/or a UE capability and/or a release number. The UE capability reported as the limitation information is, for example, information indicating that only features up to the UE capability can be used. The release number reported as the limitation information is, for example, information indicating that only features up to the release number can be used.

As a more detailed example, in a case where the highest UE capability supported by the user equipment UE is lower than a predetermined UE capability, the user equipment UE in the IDLE state transitions to a CONNECTED state, for example, based on an instruction from the base station 10 (for example, system information), and reports the UE capability of the user equipment UE itself to the base station 10. Accordingly, the base station 10 can transmit the limitation information to the another user equipment UE.

Furthermore, by backhaul signaling between base stations, each base station may exchange a UE capability reported in the serving cell with another base station. Accordingly, the base station 10 can determine the limitation information and signal the limitation information to the user equipment UE in the serving cell, taking into account the capabilities of the user equipments UE of neighboring cells. As an example, the base station 10 can report limitation information to the user equipment UE of a serving cell that is located near a neighboring cell where there is a low-capability user equipment UE.

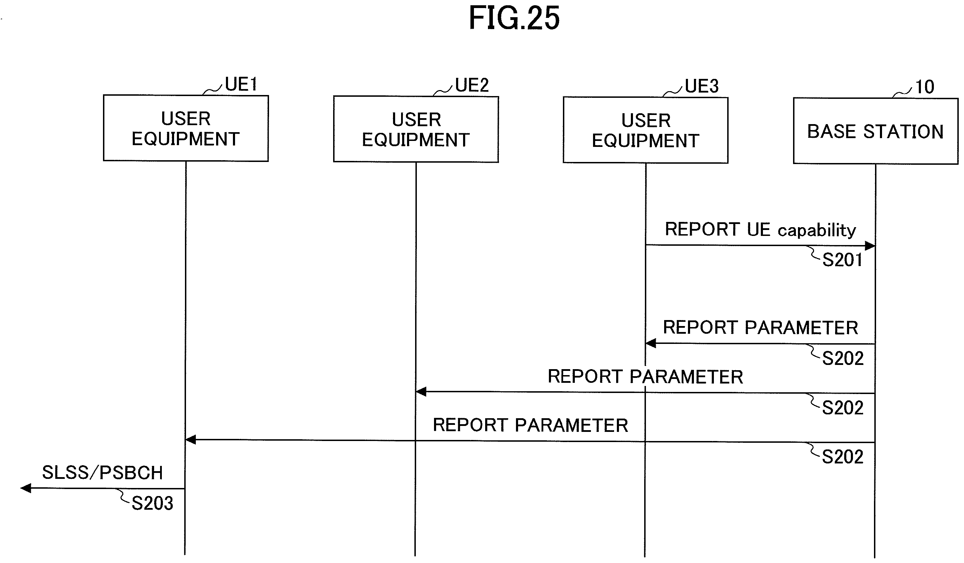

An example of the operation of example 2-3 will be described with reference to FIG. 25. This illustrates an example in which the user equipments UE1 to UE3 are located in the serving cell of the base station 10. In the example of FIG. 25, first, in step S201, the user equipment UE3 reports the UE capability to the base station 10. The base station 10 determines limitation information (here, a parameter), and transmits the determined parameter to each user equipment UE (step S202). Furthermore, the user equipment UE1 located at the cell edge transmits SLSS/PSBCH including information based on the received parameter.

### (Example common to examples 1 and 2: method of determining UE capability to be reported by user equipment UE)

Basically, the user equipment UE reports the highest UE capability that the user equipment UE itself supports. Furthermore, the UE capability to be reported may be (pre-)configured in the user equipment UE.

Furthermore, the (pre-)configuration of UE capability to be reported may one to limit the UE capability that can be reported, for example. For example, it may be assumed that a UE capability that is equal to or lower than the supported UE capability, is to be (pre-)configured as the highest UE capability allowed to be reported, in the user equipment UE supporting a certain UE capability.

For example, in the case where only transmission by a method corresponding to a low UE capability is possible due to local regulations, by performing the above method, the UE capability can be reported in accordance with the regulation. If there is no regulation, the user equipment UE can report the highest UE capability that the user equipment UE supports.

Furthermore, in a case where the user equipment UE on the receiving side of the UE capability detects a UE capability (assumed to be UE capability #2) that is lower than the highest UE capability (assumed to be UE capability #1) that the user equipment UE supports, the user equipment UE that made this detection can perform any one of the operations of the following options 1 to 3.

### <Option 1>

In option 1, the user equipment UE having the UE capability #1 does not select a transmission parameter (for example, a parameter corresponding to the UE capability #1) enabling transmission of sidelink signals that cannot be received by the user equipment UE having the UE capability #2. In this case, for example, the user equipment UE having the UE capability #1 may not transmit sidelink signals to the user equipment UE having the UE capability #2 or to a group including the user equipments UE having the UE capability #2.

Note that option 1 can be applied to both the group common manner (example 1) and the UE specific manner (example 2). Particularly, in the group common manner (example 1), in the case of, for example, multicast transmission or group cast transmission, when the user equipment UE detects even one UE capability that is lower than the UE capability supported by the user equipment UE itself, among the detected plurality of UE capabilities, the user equipment UE does not select a transmission parameter enabling transmission of sidelink signals that cannot be received by a user equipment UE having the low UE capability.

### <Option 2>

In option 2, the user equipment UE having the UE capability #1 selects, for example, a transmission parameter enabling transmission of D2D signals that can be received by the user equipment UE having the UE capability #2. Option 2 is applicable to both the group common manner (example 1) and the UE specific manner (example 2). Furthermore, in option 2, in the group common manner, when a user equipment UE having the UE capability #1 or a UE capability higher than the UE capability #1 is detected, in addition to a user equipment UE having the UE capability #2 being detected, transmission may be performed using the parameter of UE capability #1.

### <Option 3>

Option 3 is directed to the UE specific manner (example 2). In option 3, the user equipment UE having the UE capability #1 selects a transmission parameter enabling transmission of sidelink signals that can be received by the user equipment UE having the UE capability #2, for the user equipment UE having the UE capability #2.

As an example, within the user equipment UE having the UE capability #1, the detected UE capability #2 and the information (for example, a transmission source ID) of the UE that is the transmission source of the UE capability #2, are reported to an upper layer entity (for example, a layer higher than the physical layer), a transmission parameter allowed to be used is reported from the upper layer entity to the lower layer entity (for example, a physical layer), and the lower layer uses this parameter to transmit sidelink signals to the user equipment UE that is the transmission source of the detected UE capability #2 (or transmits the sidelink signals by a logical channel corresponding to the user equipment UE that is the transmission source).

### (Example common to examples 1 and 2: priority, etc.)

The priority order may be (pre-)configured in the UE capability. In an example, taking UE capability sets as an example, the priority order is (pre-)configured as "set #1 > set #2 > set #3" in a descending order of priority. For example, when the user equipment UE selects a UE capability set to be reported, the user equipment UE can select and report the UE capability with the highest priority.

If the user equipment UE receives a UE capability that is not known to the user equipment UE itself, the user equipment UE may determine that the received UE capability is higher than the highest UE capability supported by the user equipment UE itself. The user equipment UE cannot perform reception/transmission corresponding to such a high UE capability.

### (Device configuration)

Next, a functional configuration example of the user equipment UE and the base station 10 that execute the processing operations described so far will be described. The user equipment UE and the base station 10 may have all of the features of example 1 and 2, or may have the features of only one of the examples.

### <User equipment>

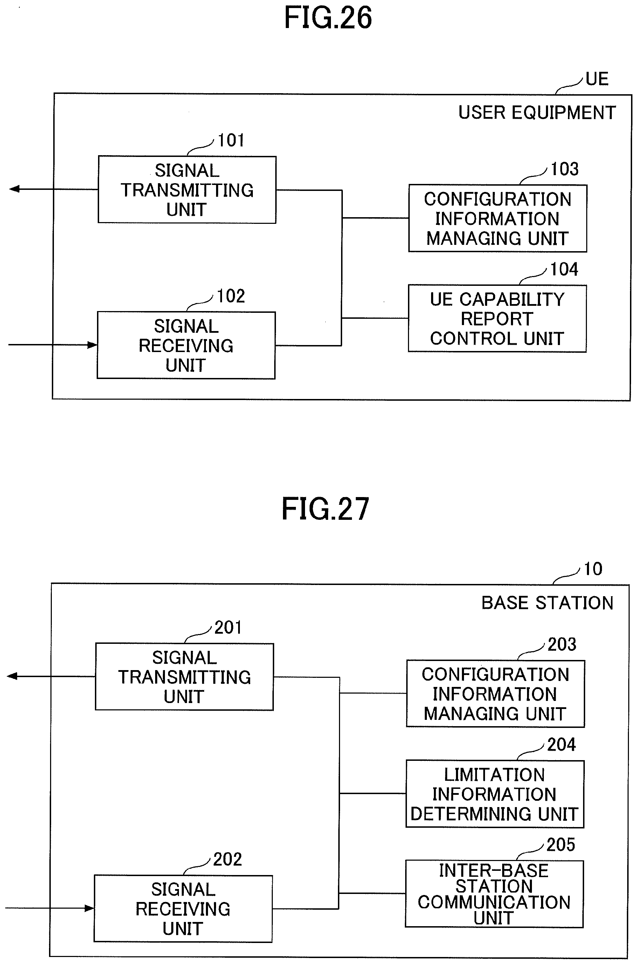

FIG. 26 is a diagram illustrating an example of the functional configuration of the user equipment UE. As illustrated in FIG. 26, the user equipment UE includes a signal transmitting unit 101, a signal receiving unit 102, a configuration information managing unit 103, and a UE capability report control unit 104. The functional configuration illustrated in FIG. 26 is merely an example. As long as the operations according to the present embodiment can be executed, the functional sections and the names of the functional units may be any section or name.

The signal transmitting unit 101 creates transmission signals from transmission data and wirelessly transmits the transmission signals. The signal receiving unit 102 wirelessly receives various signals and acquires signals of an upper layer from received signals of the physical layer. The configuration information managing unit 103 stores various kinds of configuration information received from the base station 10 by the signal receiving unit 102 and preset configuration information. An example of the configuration information is mapping information.

The UE capability report control unit 104 executes the processes related to the selection/transmission and the reception/detection of the UE capability described above, via the signal transmitting unit 101 and the signal receiving unit 102. Note that the functions related to selection/transmission of the UE capability of the UE capability report control unit 104 may be included in the signal transmitting unit 101, and the functions related to the reception/detection of the UE capability of the UE capability report control unit 104 may be included in the signal receiving unit 102.

Furthermore, for example, the configuration information managing unit 103 is configured to hold mapping information indicating the mapping between the capability information and resources in the sidelink, and the signal transmitting unit 101 transmits, based on the mapping information, report signals by using a resource corresponding to the capability information of the user equipment in the sidelink, thereby reporting the capability information of the user equipment.

Furthermore, for example, the signal receiving unit 102 is configured to detect the capability information of another user equipment, based on the received report signal, and the signal transmitting unit 101 reports the capability information indicating the lower capability from among the capability information detected by the signal receiving unit 102 and the highest capability information supported by the user equipment.

Furthermore, for example, the configuration information managing unit 103 is configured to hold mapping information indicating the mapping between capability information and resources in the sidelink, and the signal receiving unit 102 is configured to receive report signals from another user equipment, and the signal receiving unit 102 may detect the capability information of the other user equipment based on the mapping information and a resource for receiving the report signals. Furthermore, the signal transmitting unit 101 transmits sidelink signals so that another user equipment having a capability corresponding to capability information detected by the signal receiving unit can receive the sidelink signals.

The report signal is, for example, a synchronization signal, a signal transmitted in a broadcast channel, a reference signal, or a sidelink group discovery signal.

Furthermore, the signal transmitting unit 101 may be configured to transmit the capability information to the base station 10, and the signal receiving unit 102 may be configured to receive, from the base station 10, limitation information indicating the limit of the capability used for transmission of the sidelink signals.

### <Base station 10>

FIG. 27 is a diagram illustrating an example of the functional configuration of the base station 10. As illustrated in FIG. 27, the base station 10 includes a signal transmitting unit 201, a signal receiving unit 202, a configuration information managing unit 203, a limitation information determining unit 204, and an inter-base station communication unit 205. The functional configuration illustrated in FIG. 27 is merely an example. As long as the operations according to the present embodiment can be executed, the functional sections and the names of the functional units may be any section or name.

The signal transmitting unit 201 includes a function of generating a signal to be transmitted to the user equipment UE and transmitting the signal wirelessly. The signal receiving unit 202 includes a function of receiving various signals transmitted from the user equipment UE and acquiring information of an upper layer, for example, from the received signals.

The configuration information managing unit 203 stores various kinds of configuration information to be transmitted to the user equipment UE, various kinds of configuration information received from the user equipment UE, and preset configuration information. The limitation information determining unit 204 determines the limitation information described in example 2-3. The inter-base station communication unit 205 implements backhaul signaling.

### (Hardware configuration)

The block diagrams (FIGS. 26 and 27) used for describing the above embodiment are blocks of functional units. These functional blocks (constituent units) are implemented by any combination of hardware and/or software. Means for implementing each functional block is not particularly limited. That is, each functional block may be implemented by one device in which a plurality of elements are physically and/or logically combined, or two or more devices physically and/or logically separated may be directly and/or indirectly (for example, in a wired and/or wireless manner) connected to each other, and each functional block may be implemented by these plural devices.

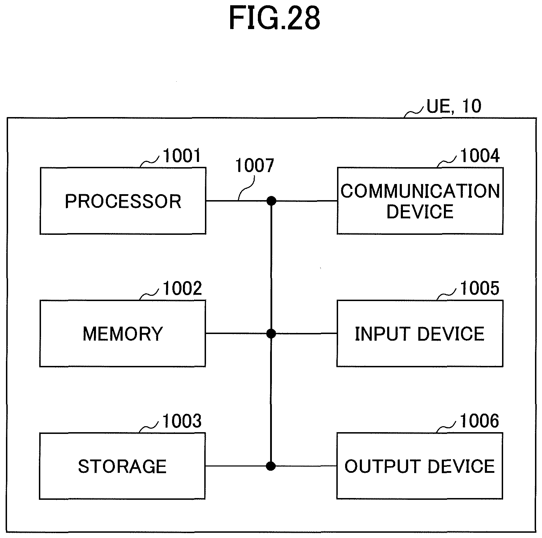

Furthermore, for example, the user equipment UE and the base station 10 according to the embodiment may both function as a computer that performs processes according to the embodiment of the present invention. FIG. 28 is a diagram illustrating an example of a hardware configuration of a radio communication apparatus that is the user equipment UE and the base station 10 according to the present embodiment. Each of the user equipment UE and the base station 10 described above may be formed as a computer apparatus physically including a processor 1001, a memory 1002, a storage 1003, a communication device 1004, an input device 1005, an output device 1006, a bus 1007, etc.

Note that in the following description, the term "device" can be read as a circuit, a device, a unit, etc. The hardware configuration of the user equipment UE and the base station 10 may be configured to include one or a plurality of devices denoted by 1001 to 1006 illustrated in the figure, or may be configured to not include some of the devices.

The functions of the user equipment UE and the base station 10 are implemented by loading predetermined software (program) in hardware such as the processor 1001 and the memory 1002, computing by the processor 1001, communicating by the communication device 1004, and controlling the reading and/or writing of data in the memory 1002 and the storage 1003.

The processor 1001 operates, for example, the operating system to control the entire computer. The processor 1001 may be formed of a central processing unit (CPU) including an interface with a peripheral device, a control device, an arithmetic device, and a register, etc.

Furthermore, the processor 1001 loads a program (program code), a software module, or data from the storage 1003 and/or the communication device 1004, into the memory 1002, and executes various processes according to the program, the software module, or the data. As the program, a program for causing a computer to execute at least part of the operations described in the above embodiment is used. For example, the signal transmitting unit 101, the signal receiving unit 102, the configuration information managing unit 103, and the UE capability report control unit 104 of the user equipment UE illustrated in FIG. 26 may be implemented by a control program stored in the memory 1002 and operating on the processor 1001. Furthermore, for example, the signal transmitting unit 201, the signal receiving unit 202, the configuration information managing unit 203, the limitation information determining unit 204, and the inter-base station communication unit 205 of the base station 10 illustrated in FIG. 27 may be implemented by a control program stored in the memory 1002 and operating on the processor 1001. Although it has been described that the above-described various processes are executed by one processor 1001, the processes may be executed simultaneously or sequentially by two or more processors 1001. The processor 1001 may be implemented with one or more chips. Note that the program may be transmitted from the network via an electric communication line.

The memory 1002 is a computer-readable recording medium and may be formed of at least one of a ROM (Read Only Memory), an EPROM (Erasable Programmable ROM), an EEPROM (Electrically Erasable Programmable ROM), and a RAM (Random Access Memory). The memory 1002 may be referred to as a register, a cache, and a main memory, etc. The memory 1002 can store executable programs (program codes), software modules, etc., for implementing the process according to the embodiment of the present invention.

The storage 1003 is a computer-readable recording medium, and may be formed of, for example, at least one of an optical disk such as a CD-ROM (Compact Disc ROM), a hard disk drive, a flexible disk, a magneto-optical disk (for example, a compact disk, a digital versatile disk, and a Blu-ray (registered trademark) disk), a smart card, a flash memory (for example, a card, a stick, and a key drive), a floppy (registered trademark) disk, and a magnetic strip, etc. The storage 1003 may be referred to as a secondary storage device. The above-described storage medium may be, for example, a database including the memory 1002 and/or the storage 1003, a server, or another appropriate medium.

The communication device 1004 is hardware (transmission/reception device) for performing communication between computers via a wired and/or wireless network, and is also referred to as a network device, a network controller, a network card, and a communication module, etc., for example. For example, the signal transmitting unit 101 and the signal receiving unit 102, etc., of the user equipment 10 may be implemented by the communication device 1004. Furthermore, the signal transmitting unit 201 and the signal receiving unit 202, etc., of the base station 10 may be implemented by the communication device 1004.

The input device 1005 is an input device (for example, a keyboard, a mouse, a microphone, a switch, a button, and a sensor, etc.) that accepts input from the outside. The output device 1006 is an output device (for example, a display, a speaker, and an LED lamp, etc.) that performs output to the outside. Note that the input device 1005 and the output device 1006 may be integrated (for example, a touch panel).

Furthermore, the respective devices such as the processor 1001 and the memory 1002 are connected by a bus 1007 for communicating information. The bus 1007 may be formed of a single bus or may be formed of different buses between the devices.

Furthermore, each of the user equipment UE and the base station 10 may include hardware such as a microprocessor, a digital signal processor (DSP), an application specific integrated circuit (ASIC), a programmable logic device (PLD), and a field programmable gate array (FPGA), and a part of or all of the functional blocks may be implemented by the hardware. For example, the processor 1001 may be implemented with at least one of these hardware elements.

### (Overview of embodiment)

As described above, according to the embodiment of the present invention, there is provided a user equipment in a radio communication system, the user equipment including a configuration information managing unit configured to hold mapping information indicating mapping between capability information and a resource in sidelink; and a signal transmitting unit configured to report capability information of the user equipment, by transmitting a report signal by using a resource corresponding to the capability information of the user equipment in the sidelink, based on the mapping information.

According to the above configuration, there is provided a technique enabling the user equipment supporting the sidelink communication to transmit sidelink capability information to another user equipment or receive sidelink capability information from another user equipment.

The user equipment may further include a signal receiving unit configured to detect capability information of another user equipment, based on a received report signal, wherein the signal transmitting unit may report capability information indicating a lower capability, determined from among the capability information detected by the signal receiving unit and the capability information indicating a highest capability supported by the user equipment. With this configuration, even when there is a limitation of Half Duplex, the user equipment can detect that there is a user equipment capable of sidelink communication with itself in the vicinity.

Furthermore, according to the embodiment of the present invention, there is provided a user equipment in a radio communication system, the user equipment including a configuration information managing unit configured to hold mapping information indicating mapping between capability information and a resource in sidelink; and a signal receiving unit configured to receive a report signal from another user equipment, wherein the signal receiving unit detects capability information of the another user equipment, based on the mapping information and a resource receiving the report signal.

According to the above configuration, there is provided a technique enabling the user equipment supporting the sidelink communication to transmit sidelink capability information to another user equipment or receive sidelink capability information from another user equipment.

The user equipment may further include a signal transmitting unit configured to transmit a sidelink signal, wherein the signal transmitting unit may transmit the sidelink signal such that the another user equipment, which has a capability indicated by the capability information detected by the signal receiving unit, can receive the sidelink signal. Thereby, for example, it is possible to transmit the sidelink signals in accordance with the capabilities of the user equipments in the vicinity.

The report signal is, for example, a synchronization signal, a signal transmitted in a broadcast channel, a reference signal, or a sidelink group discovery signal. With this configuration, various kinds of signals can be used as report signals.

Furthermore, according to the embodiment of the present invention, there is provided a capability information reporting method executed by a user equipment in a radio communication system, the user equipment including a configuration information managing unit configured to hold mapping information indicating mapping between capability information and a resource in sidelink, the capability information reporting method including a signal transmitting step of reporting capability information of the user equipment, by transmitting a report signal by using a resource corresponding to the capability information of the user equipment in the sidelink, based on the mapping information.

According to the above configuration, there is provided a technique enabling the user equipment supporting the sidelink communication to transmit sidelink capability information to another user equipment or receive sidelink capability information from another user equipment.

### (Supplement of embodiment)

The embodiment of the present invention is described above; however the disclosed invention is not limited to the embodiment, and a person ordinarily skilled in the art will appreciate various variations, modifications, alternatives, replacements, and so forth. Specific examples of numerical values are used in the description in order to facilitate understanding of the invention. However, these numerical values are merely an example, and any other appropriate values may be used, except as indicated otherwise. The separations of the items in the above description are not essential to the present invention. Depending on necessity, subject matter described in two or more items may be combined and used, and subject matter described in an item may be applied to subject matter described in another item (provided that they do not contradict). A boundary of a functional unit or a processor in the functional block diagrams may not necessarily correspond to a boundary of a physical component. An operation by a plurality of functional units may be physically executed by a single component, or an operation of a single functional unit may be physically executed by a plurality of components. The order of the processes in each of the processing procedures described in the embodiment may be re-arranged, provided that they do not contradict. For the convenience of description, the user equipment UE and the base station 10 are described by using the functional block diagrams; however, such devices may be implemented in hardware, software, or combinations thereof. The software to be executed by the processor included in the user equipment UE in accordance with the embodiment of the present invention and the software to be executed by the processor included in the base station 10 may be stored in any appropriate storage medium, such as a random access memory (RAM), a flash memory, a read-only memory (ROM), an EPROM, an EEPROM, a register, a hard disk drive (HDD), a removable disk, a CD-ROM, a database, a server, and so forth.

Furthermore, notification of information is not limited to the aspect/embodiment described in the present specification and may be performed by other methods. For example, notification of information may be performed via physical layer signaling (for example, Downlink Control Information (DCI) or Uplink Control Information (UCI)), upper-layer signaling (for example, RRC (Radio Resource Control) signaling, MAC (Medium Access Control) signaling, broadcast information (Master Information Block (MIB), or System Information Block (SIB))), other signals, or by a combination thereof. Moreover, an RRC message may be referred to as the RRC signaling. Furthermore, RRC signaling may be referred to as the RRC message, and may be an RRC connection setup (RRC Connection Setup) message, a RRC connection reconfiguration (RRC Connection Reconfiguration) message, etc., for example.

Furthermore, each aspect/embodiment described in this specification can be applied to long term evolution (LTE), LTE-advanced (LTE-A), SUPER 3G, IMT-Advanced, 4G, 5G, Future Radio Access (FRA), W-CDMA (registered trademark), GSM (registered trademark), CDMA2000, Ultra Mobile Broadband (UMB), IEEE 802.11 (Wi-Fi), IEEE 802.16 (WiMAX), IEEE 802.20, Ultra-Wideband (UWB), Bluetooth (registered trademark), any other systems using an appropriate system and/or next generation systems expanded on the basis of these systems.

Furthermore, processing procedures, sequences, flowcharts, etc., of each embodiment/modified example described in the specification may be exchanged as long as there is no inconsistency. For example, for the methods described in the specification, the elements of the various steps are presented in an exemplary order and are not limited to a specific order presented.

Certain operations performed by the base station 10 as described in the present specification may be performed by its upper node in some cases. In a network including one or more network nodes having base stations 10, various operations performed to communicate with user equipments UE may be apparently performed by the base stations 10 and/or network nodes other than the base stations 10 (for example, a MME or an S-SW can be assumed, but the network nodes are not limited to them). Although it has been described that the single network node other than the base stations 10 is used in the above example, combinations of multiple other network nodes (for example, an MME and an S-GW) may be used.

Each aspect/embodiment described in this specification may be used alone, may be used in combination, or may be used while being switched during the execution.

The user equipment UE may be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or any other appropriate terminologies.

The base station 10 may be referred to by those skilled in the art as NB (Node B), eNB (enhanced Node B), base station, gNB, or some other suitable terminology.

The terms "determining" and "deciding" used in this specification may include various types of operations. For example, "determining" and "deciding" may include deeming that a result of judging, calculating, computing, processing, deriving, investigating, looking up (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided.

The expression "on the basis of" used in the present specification does not mean "on the basis of only" unless otherwise stated particularly. In other words, the expression "on the basis of" means both "on the basis of only" and "on the basis of at least".

As long as the terminologies "include", "including" and variations thereof are used in the present specification or claims, these terminologies are intended to be inclusive similar to the terminology "comprising". Furthermore, the terminology "or" as used in the present specification or claims is intended not to be an exclusive OR.

In the entire present disclosure, for example, if articles are added by translation, such as a, an, and the in English, these articles may indicate plurality, unless it is clearly indicated from the context that these articles do not indicate plurality.

Although the present invention has been described in detail, it is apparent to those skilled in the art that the present invention is not limited to the embodiments as described in the present specification. The present invention can be implemented as modifications and variations without departing from the sprit and scope of the present invention as defined in claims. Thus, the description in the present specification is intended for exemplary description and does not mean any limitation to the present invention.

### [Reference Signs List]

- UE: user equipment
- 101: signal transmitting unit
- 102: signal receiving unit
- 103: configuration information managing unit
- 104: UE capability report control unit
- 10: base station
- 201: signal transmitting unit
- 202: signal receiving unit
- 203: configuration information managing unit
- 204: limitation information determining unit
- 205: inter-base station communication unit
- 1001: processor
- 1002: memory
- 1003: storage
- 1004: communication device
- 1005: input device
- 1006: output device

## Claims

1. A user equipment in a radio communication system, the user equipment comprising:
a configuration information managing unit configured to hold mapping information indicating mapping between capability information and a resource in sidelink; and
a signal transmitting unit configured to report capability information of the user equipment, by transmitting a report signal by using a resource corresponding to the capability information of the user equipment in the sidelink, based on the mapping information.

2. The user equipment according to claim 1, further comprising:
a signal receiving unit configured to detect capability information of another user equipment, based on a received report signal, wherein
the signal transmitting unit reports capability information indicating a lower capability, determined from among the capability information detected by the signal receiving unit and the capability information indicating a highest capability supported by the user equipment.

3. A user equipment in a radio communication system, the user equipment comprising:
a configuration information managing unit configured to hold mapping information indicating mapping between capability information and a resource in sidelink; and
a signal receiving unit configured to receive a report signal from another user equipment, wherein
the signal receiving unit detects capability information of the another user equipment, based on the mapping information and a resource receiving the report signal.

4. The user equipment according to claim 3, further comprising:
a signal transmitting unit configured to transmit a sidelink signal, wherein
the signal transmitting unit transmits the sidelink signal such that the another user equipment, which has a capability indicated by the capability information detected by the signal receiving unit, can receive the sidelink signal.

5. The user equipment according to any one of claims 1 to 4, wherein
the report signal is a synchronization signal, a signal transmitted in a broadcast channel, a reference signal, or a sidelink group discovery signal.

6. A capability information reporting method executed by a user equipment in a radio communication system, the user equipment including
a configuration information managing unit configured to hold mapping information indicating mapping between capability information and a resource in sidelink, the capability information reporting method comprising:
a signal transmitting step of reporting capability information of the user equipment, by transmitting a report signal by using a resource corresponding to the capability information of the user equipment in the sidelink, based on the mapping information.
